# EUROPEAN PATENT APPLICATION

(11) **EP 1 279 648 A2**
(43) Date of publication of application: **29.01.2003**
(21) Application number: 02291849.4
(22) Date of filing: 22.07.2002
(51) Int. Cl.: C03B 37/018, C03B 37/014, G02B 6/16

(54) **Optical fiber and preform and method for manufacturing the optical fiber preform**

(30) Priority: 26.07.2001 JP 2001226106; 13.02.2002 JP 2002356656
(71) Applicant: FUJIKURA LTD., Kohtoh-ku Tokyo (JP)
(72) Inventor: Matsuo, Shoichiro, c/o Fujikura Ltd., Sakura-shi, Chiba-ken (JP); Tanigawa, Shoji, c/o Fujikura Ltd., Sakura-shi, Chiba-ken (JP); Himeno, Kuniharu, c/o Fujikura Ltd., Sakura-shi, Chiba-ken (JP); Harada, Koichi, c/o Fujikura Ltd., Sakura-shi, Chiba-ken (JP)
(74) Representative: Verdure, Stéphane

(57) **Abstract**

An improved method for manufacturing an optical fiber preform uses the CVD method in which a portion of or the whole of the optical fiber preform is formed by depositing glass on the inner wall of the starting tube (14). The method comprises a first step of depositing glass on the inner wall of the starting tube (14) and collapsing the starting tube (14) so that a silica rod is formed; a second step of removing the starting tube (14) surrounding the silica rod or removing the starting tube (14) and a part of synthetic glass; and a third step of depositing glass on an outer periphery of the silica rod obtained in the second step. By setting the refractive index of the cladding (19) to be less than that of pure silica using the present method, an optical fiber having an extremely low transmission loss may be obtained.

## Description

### BACKGROUND OF THE INVENTION

### Field of the Invention

This invention relates to an optical fiber, an optical fiber preform, and a method for manufacturing an optical fiber preform, which is a type of CVD (Chemical Vapor Deposition) method, and which specifically comprises the step of removing a starting tube after forming a silica rod by depositing glass on the inner wall of the starting tube.

### Background Art

As a method for manufacturing an optical fiber preform, the VAD (Vapor-phase Axial Deposition) method, the OVD (Outside Vapor-phase Deposition) method, the MCVD (Modified Chemical Vapor Deposition) method, and the PCVD (Plasma-activated Chemical Vapor Deposition) method are well known. The MCVD method and the PCVD method (hereinafter simply referred to as CVD methods) comprise the steps of: supplying source glass material gas consisting of, for example, SiCl₄, GeCl₄, or the like into a starting tube made of, for example, silica; heating the starting tube from outside by means of an oxy-hydrogen flame burner, plasma, or the like while rotating the starting tube about its axis so that glass particles or glass layers, which will form a core, a part of a core or a cladding, or the whole of a core or a cladding, are formed and deposited on an inner wall of the starting tube; and collapsing the starting tube so that a part of or the whole of an optical fiber preform is formed.

Furthermore, if necessary, additional glass, which will form a part of or the whole of the cladding, is deposited on the outer periphery of the glass preform obtained by the above method by an outside deposition method or rod-in-tube method.

The aforementioned method is preferred for manufacturing optical fibers such as a dispersion shifted optical fiber, dispersion compensation optical fiber, or the like in which a complex refractive index profile is required, because in this method, the refractive index of the deposited glass can be precisely controlled by adjusting the type and quantity of the source glass material gas to be supplied into the starting tube.

On the other hand, in the above-mentioned CVD method, the design of the refractive index profile in the optical fiber preform is restricted in various ways as will be explained below.

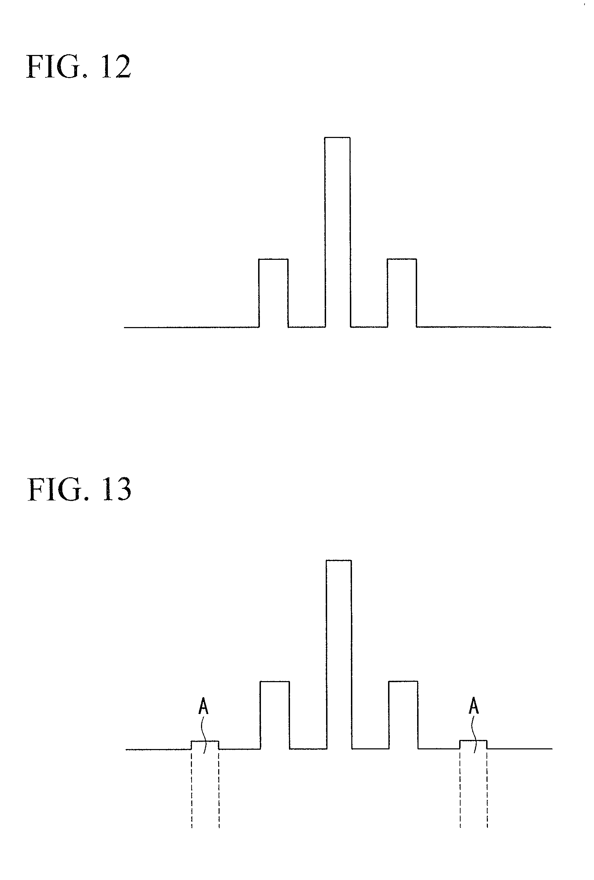

For example, when an optical fiber preform for a non-zero dispersion shifted optical fiber having the refractive index profile shown in FIG. 12 is desired to be manufactured using the CVD method and the subsequent outside deposition method, an optical fiber preform having the refractive index profile shown in FIG. 13 is actually obtained.

As shown in FIG. 13, outside the cladding, there are areas A having a slightly high refractive index. The optical fiber formed from the optical fiber preform having such a refractive index profile will be affected in its cut-off wavelength.

The following measures have been taken to prevent such an effect:
(1) Adjust the refractive index profile so that the cut-off wavelength is not affected; or
(2) Dope a dopant in a part of the glass which is formed by an outside deposition method and which will form a cladding so that the glass has the same refractive index as that of the starting tube.

In a dispersion shifted optical fiber or dispersion compensation optical fiber, the flexibility in designing the refractive index profile is limited; therefore, when the measure (1) is taken, other characteristics such as a mode field diameter, an effective core area, a dispersion slope, a bending loss, or the like may be inevitably degraded. On the other hand, the measure (2) may not be applicable to all types of optical fiber preform in terms of manufacturability.

As another example, when an optical fiber preform for a silica core optical fiber whose core is made of pure silica is manufactured using the CVD method, the following measures may be taken:
(1) Use a starting tube whose refractive index equals that of silica;
(2) Use a glass tube as the starting tube which is made of glass whose refractive index is lowered to be less than that of silica by doping fluorine.

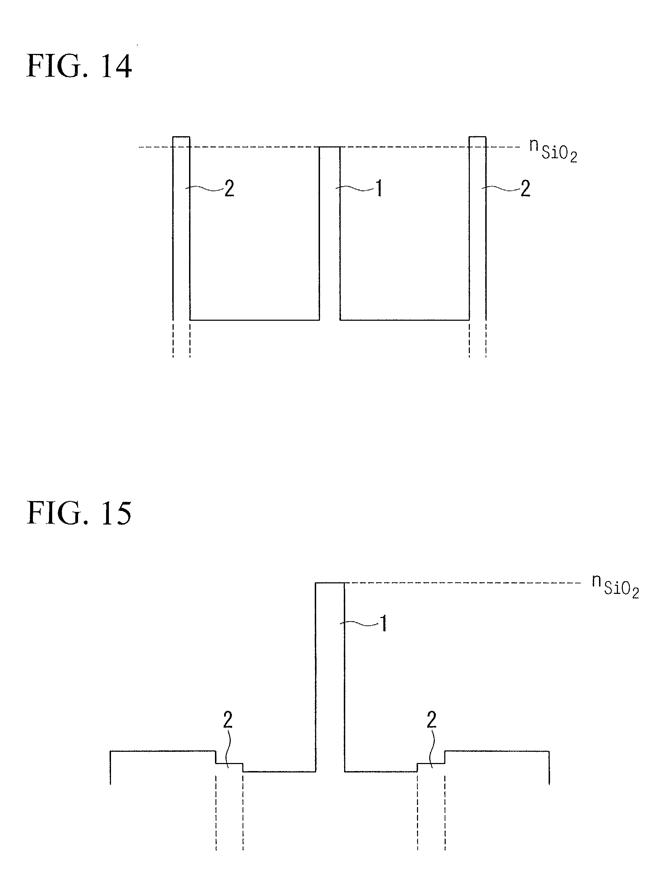

In the measure (1), as the refractive index profile is shown in FIG. 14, the starting tube 2 must be located away from the core 1 by a distance about 7 times the diameter of the core 1. As an undesirable result, the length of the optical fiber drawn from an optical fiber preform is reduced. For example, when an optical fiber preform whose diameter and length is 20 mm and 1000 mm, respectively, is made using the measure (1), the length of the optical fiber drawn therefrom is no more than 26 km, which means insufficient manufacturability for mass production.

In the measure (2), as shown in FIG. 15, the starting tube 2 whose refractive index is designed corresponding to the relative refractive index difference of the core 1 must be provided, which increases load in manufacturing. In addition, when the starting tube does not comply with the requirement for the refractive index, the design of the refractive index profile in the optical fiber preform may be restricted.

Furthermore, in a dispersion shifted optical fiber and dispersion compensation optical fiber, it is difficult to reduce transmission loss due to Rayleigh scattering caused by a dopant such as germanium which is doped in the core. When the quantity of germanium dopant in the core is decreased to mitigate Rayleigh scattering and when the refractive index of the cladding is desired to be low, a designed dispersion characteristic cannot be obtained because both of the refractive index profile and the relative refractive index difference between the core and the cladding become inadequate. On the other hand, when the refractive index of the cladding is desired to be decreased as the refractive index of the core is decreased, the same problem as in the case of an optical fiber preform for a silica core optical fiber is encountered. Thus, as long as the known methods are used, it is difficult to reduce transmission loss in dispersion shifted optical fibers and dispersion compensation optical fibers.

As explained above, various problems are encountered when an optical fiber preform is manufactured using the conventional CVD method or by the combination of the CVD method and the outside deposition method.

### SUMMARY OF THE INVENTION

An object of the present invention is to solve the above problems which are encountered when a part of or the whole of an optical fiber preform is manufactured by depositing glass on the inner wall of the starting tube.

The research to solve the above problems has revealed that the problems in the CVD method is caused by glass which originates from the starting tube and which is contained in the optical fiber preform.

Therefore, in order to solve the above problems, a step of removing the glass originating from the starting tube by grinding or the like should be provided when an optical fiber preform is manufactured using the CVD method.

The present invention is based on the above-mentioned findings. According to a first aspect of the present invention, a method for manufacturing an optical fiber preform comprises: a first step of depositing glass on an inner wall of a starting tube and collapsing said starting tube so that a silica rod is formed; and a second step of removing the starting tube surrounding the silica rod or removing the starting tube and a portion of synthetic glass.

According to a second aspect of the present invention, a method for manufacturing an optical fiber preform comprises: a first step of depositing glass on an inner wall of a starting tube and collapsing the starting tube so that a silica rod is formed; a second step of removing the starting tube surrounding the silica rod or removing the starting tube and a portion of synthetic glass; and a third step of depositing glass on an outer periphery of the silica rod obtained in the second step.

The second step may be performed by any one of flame polishing, plasma etching, and mechanical polishing.

In the first step, glass for forming a core and glass for forming a cladding may be deposited.

Alternatively, in the first step, glass for forming a core may be deposited, or glass for forming a core and glass for forming a portion of a cladding may be deposited.

In the third step, glass for forming a cladding may be deposited.

A third aspect of the present invention provides an optical fiber preform formed by the method according to the first aspect of the present invention.

A fourth aspect of the present invention provides an optical fiber preform formed by the method according to the second aspect of the present invention.

In the above optical fiber preform, the refractive index of the glass for forming the cladding deposited in the third step may be substantially the same as that of pure silica glass.

In the above optical fiber preform, the refractive index of the glass for forming the cladding deposited in the third step may be lower than that of pure silica glass.

A fifth aspect of the present invention provides an optical fiber formed from the above-described optical fiber preform.

In the above optical fiber, over the range selected from a wavelength band between 1460 and 1625 nm, the absolute value of the chromatic dispersion of said optical fiber may be between 1 and 15 ps/nm/km, the absolute value of the dispersion slope thereof may be equal to or less than 0.1 ps/nm²/km, and the transmission loss thereof at a wavelength of 1550 nm may be equal to or less than 0.195 dB/km.

In the above optical fiber, over the range selected from a wavelength band between 1460 and 1625 nm, the chromatic dispersion of the optical fiber is a negative value, the refractive index of the cladding may be less than that of pure silica glass, and the transmission loss of the optical fiber at a wavelength of 1550 nm may be less, by at least 0.01 dB/km, than that of a comparative optical fiber which fulfills the following conditions:
(a) the refractive index of the cladding of the comparative optical fiber is equal to that of pure silica glass; and
(b) the relative refractive index profile with respect to the refractive index of the cladding of the comparative optical fiber is the same profile as that of said optical fiber.

In the above optical fiber, the dispersion slope of the optical fiber may be a negative value.

### BRIEF DESCRIPTION OF THE DRAWINGS

FIG. 1 shows the refractive index profile of a non-zero dispersion shifted optical fiber obtained from the optical fiber preform according to the present invention.
FIG. 2 shows the refractive index profile of a dispersion slope/dispersion shifted optical fiber obtained from the optical fiber preform according to the present invention.
FIG. 3 shows an example of the relationship between chromatic dispersion and transmission loss of a dispersion compensation optical fiber.
FIG. 4 shows the refractive index profile of the example 1 of the optical fiber preform according to the present invention.
FIG. 5 shows the refractive index profile of the example 1 of the optical fiber preform according to the present invention in the middle step for manufacturing.
FIG. 6 shows the refractive index profile of the example 2 of the optical fiber preform according to the present invention.
FIG. 7 shows the refractive index profile of the example 2 of the optical fiber preform according to the present invention in the middle step for manufacturing.
FIG. 8 shows the refractive index profile of the example 3 of the optical fiber preform according to the present invention.
FIG. 9 shows the refractive index profile of the example 3 of the optical fiber preform according to the present invention in the middle step for manufacturing.
FIG. 10 shows the refractive index profile of a non-zero dispersion shifted optical fiber obtained by a conventional method, in which the refractive index of the cladding is substantially the same as that of pure silica.
FIG 11 shows the refractive index profile of a dispersion slope compensation/dispersion compensation optical fiber obtained by a conventional method, in which the refractive index of the cladding is substantially the same as that of pure silica.
FIG. 12 shows the refractive index profile of an optical fiber preform for an non-zero dispersion shifted optical fiber.
FIG. 13 shows the refractive index profile of a non-zero dispersion shifted optical fiber obtained by a conventional method.
FIG. 14 shows the refractive index profile of an example of an optical fiber preform which is obtained by a conventional method, and which has a core made of pure silica.
FIG. 15 shows the refractive index profile of another example of an optical fiber preform which is obtained by a conventional method, and which has a core made of pure silica.

### DETAILED DESCRIPTION OF THE PREFERRED EMBODIMENTS

The preferred embodiments of the present invention will be explained with reference to the accompanying drawings.

### - Method for manufacturing an optical fiber preform

The first step of the method for manufacturing an optical fiber preform according to the first aspect of the present invention is performed using the MCVD method or the PCVD method in which: a source glass material gas consisting of SiCl₄, GeCl₄, or the like is supplied into a starting tube made of silica or the like; and the starting tube is heated from outside by means of a heat source such as an oxy-hydrogen flame burner, plasma, or the like while rotating the starting tube about its axis so that glass particles which will form a core or the whole of a core and a cladding are formed and deposited on an inner wall of the starting tube. In this step, it is apparent that the refractive index is controlled by adjusting the type or quantity of the source glass material gas.

The starting tube in the above state is then intensively heated to about 2,000°C, and is collapsed (solidified) to form a silica rod. The second step comprises a step of removing the starting tube region around the periphery of the silica rod. The removing process may be performed using a solvent such as hydrogen fluoride or the like, by flame polishing, plasma etching, or mechanical polishing; however, flame polishing and plasma etching are specifically preferred in terms of cleanliness and productivity. In the removing operation, not only the starting tube, but also a portion of the glass inside the starting tube may be removed.

In accordance with the conventional method, an optical fiber is drawn from the optical fiber preform thus obtained.

The method for manufacturing an optical fiber preform, according to the second aspect of the present invention comprises, after the second step according to the first aspect, the third step of depositing glass, which will form a part of or the whole of the cladding, on the outer periphery of the silica rod.

The third step is performed using: the outside deposition method comprising applying flame of the oxy-hydrogen burner containing the source glass material gas to the silica rod to deposit glass particles formed in the flame, and heating the glass for vitrification; the rod-in-tube method comprising inserting the post-removal silica rod into a silica tube and applying heat to make them integrated; or a similar method.

In the first step in this manufacturing method, the core is deposited or the core and a portion of the cladding are deposited.

In accordance with the conventional method, optical fiber is drawn from the optical fiber preform thus obtained.

### - Optical fiber preform

The optical fiber preform according to the present invention may be formed by the method according to the first aspect. The core and cladding of this optical fiber preform were formed in the first step in the above manufacturing method and do not contain glass originating from the starting tube because it has been removed.

Therefore, the optical fiber obtained from this optical fiber preform has the designed refractive index profile without undesired variations.

The optical fiber preform according to the present invention may be formed by the method according to the second aspect. The core and a part of the cladding of this optical fiber preform were formed in the first step, the remaining portion of the cladding was formed in the third step, and does not contain glass originating from the starting tube or glass originating from the starting tube and a portion of the cladding formed in the first step because they have been removed in the second step.

For this optical fiber preform, the third step may be performed using the outside deposition method, and the refractive index of the remaining portion of the cladding formed by the outside deposition method may be substantially the same as that of pure silica glass. This optical fiber preform is suitable for mass production because it can be obtained by only vitrificating the soot deposited using the outside deposition method.

Furthermore, for this optical fiber preform, the third step may be performed using the outside deposition method, and the refractive index of the remaining portion of the cladding formed by the outside deposition method may be lower than that of pure silica glass. Such an optical fiber preform will preferably provide an optical fiber with a low transmission loss because it is possible to reduce the amount of dopant such as germanium dioxide or the like in the core region.

In the optical fiber preform obtained using the above method of the present invention, because the glass originating from the starting tube has been removed in the second step, it will not affect the refractive index profile of the optical fiber preform, the design flexibility in the refractive index is enhanced, a specific starting tube need not be prepared, and productivity and production flexibility are improved.

From such an optical fiber preform, an optical fiber which is not affected by impurity originating from the starting tube, and which has superior optical properties, may be formed.

### - Optical fiber

The optical fiber of the present invention may be formed from the preform according to the present invention by drawing. This optical fiber does not have undesirable properties due to the residual starting tube; thus, it exhibits superior optical properties.

The optical fiber according to the present invention may be the optical fiber in which, over the range selected from a wavelength band between 1460 and 1625 nm, the absolute value of the chromatic dispersion is between 1 and 15 ps/nm/km, the absolute value of the dispersion slope is equal to or less than 0.1 ps/nm²/km, and the transmission loss at a wavelength of 1550 nm is equal to or less than 0.195 dB/km.

Such optical fibers are preferably used as non-zero dispersion shifted optical fibers (NZDSF).

The reason for setting the chromatic dispersion in a transmission band to a certain value not being zero is to shift the non-zero dispersion wavelength out of the transmission band so as to reduce non-linear optical effects. By this setting, it is possible to suppress signal degradation due to such as four-wave mixing. The transmission band and the chromatic dispersion may be selected from the range described above depending on the purposes.

When the absolute value of the dispersion slope is set to be equal to or less than 0.1 ps/nm²/km, because the variation in dispersion characteristics depending on wavelength becomes small, it is possible to broaden the transmission band and to increase wavelength multiplicity in WDM (Wavelength Division Multiplexing).

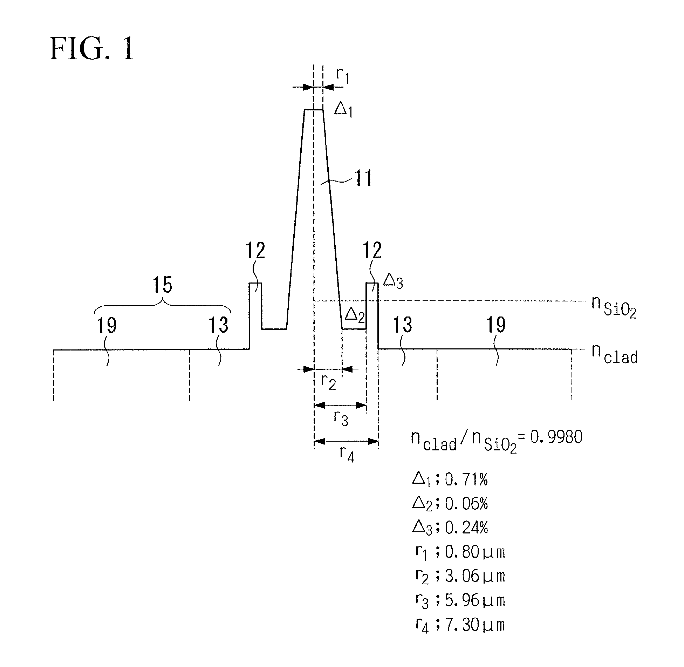

The above-mentioned dispersion characteristics may be obtained by setting the refractive index profile to that, for example, shown in FIG. 1. This refractive index profile is exhibited by an optical fiber having a dual structure in which a ring core region 12 is disposed around a central core region 11.

In FIG 1, n_{clad}/n_{SiO2}=0.9980; Δ₁=0.71%; Δ₂=0.06%; Δ₃=0.24%; r₁=0.80 µm; r₂=3.06 µm; r₃=5.96 µm; and r₄=7.30 µm.

In the optical fiber according to this embodiment, signal degradation will be greatly suppressed because the transmission loss at a wavelength of 1550 nm is equal to or less than 0.195 dB/km. In addition, it is also possible to increase the transmission distance and wavelength multiplicity.

In order to realize a lower transmission loss as mentioned above, the quantity of germanium to be doped in the core comprising the central core region 11 and the ring core region 12 may be reduced, for example, so as to decrease the refractive indexes of a side core region 16 and a cladding region 15 depending on the reduced amount of germanium using the method for manufacturing an optical fiber preform according to the present invention. Accordingly, the transmission loss in a non-zero dispersion shifted optical fiber can be greatly reduced without having degradation in the dispersion characteristics of the same.

The non-zero dispersion shifted optical fiber according to this embodiment may be manufactured, for example, in accordance with the following steps.

In the first step, the central core region 11, the ring core region 12, and a portion 13 of the cladding 15 are formed using the CVD method. In the second step, the glass originating from the starting tube is removed by grinding or polishing. In the third step, the remaining portion 19 of the cladding 15 is formed using the outside deposition method.

In the third step, in order to dope fluorine into the remaining portion 19 of the cladding 15, a fluorine gas may be added to the source glass material gas so as to have a soot containing fluorine deposited; the soot may then be vitrified. Alternatively, soot not containing fluorine may be deposited first, then, a fluorine containing gas may be added during vitrification so that fluorine doped glass is formed.

The optical fiber according to this embodiment can be obtained by drawing the optical fiber preform after the vitrification process.

The optical fiber according to the present invention may be characterized in that, over the range selected from a wavelength band between 1460 and 1625 nm, the chromatic dispersion of the optical fiber is a negative value, the refractive index of the cladding is less than that of pure silica glass, and the transmission loss of the optical fiber at a wavelength of 1550 nm is less, by at least 0.01 dB/km, than that of a reference optical fiber which fulfills the following conditions:
(a) the refractive index in the cladding of the reference optical fiber is equal to that of pure silica glass; and
(b) the relative refractive index profile with respect to the refractive index in the cladding of the reference optical fiber has the same profile as that of the above optical fiber.

The relative refractive index profile herein referred to means the distribution profile of the relative refractive index differences of various regions in the optical fiber with respect to the refractive index of the cladding. In two optical fibers having the same relative refractive index profile, the refractive index profiles are also the same with each other; therefore, the refractive index differences between the corresponding portions, such as the core or the cladding, in the two optical fibers are consistent.

In the optical fiber of this embodiment, it is possible to reduce transmission loss by reducing the quantity of a dopant, such as germanium, doped into the core so that the refractive index of the cladding is less than that of pure silica. In addition, by setting the relative refractive index profile of this optical fiber to be as same in an optical fiber in which the refractive index of the cladding is equal to that of pure silica, this optical fiber may have superior properties as in a conventional optical fiber without substantially affecting optical characteristics such as dispersion characteristics, cut-off wavelength, and the like.

Such an optical fiber can be preferably used as of the type of dispersion compensation fiber such as a dispersion slope compensating fiber, a dispersion compensating fiber, or the like.

In such a case, by setting the chromatic dispersion in the transmission band to be negative, it is possible to compensate for the accumulated chromatic dispersion in the transmission path, and to suppress transmission time differences between the signal lights having different wavelengths to each other. The magnitude of the chromatic dispersion may be suitably selected depending on the type and the accumulated chromatic dispersion of the optical fiber used as a transmission path.

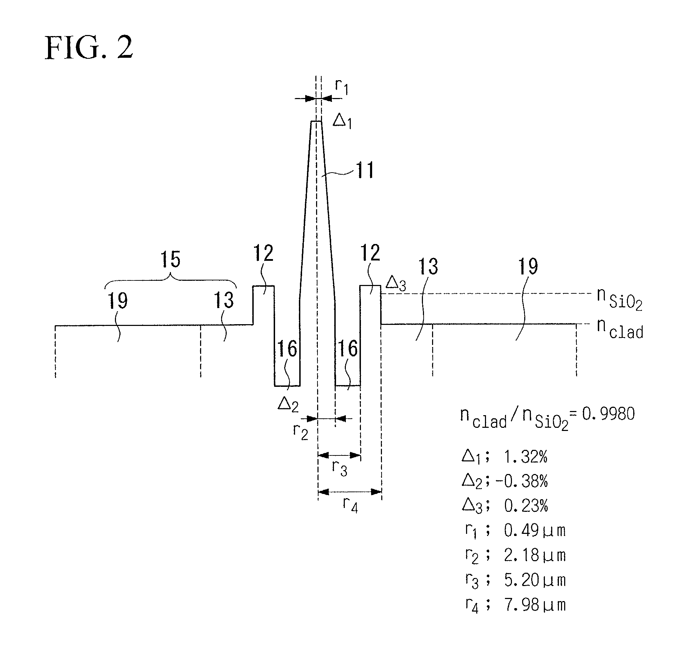

The above-mentioned dispersion characteristic can be obtained by setting the refractive index profile to as shown in FIG 2.

In FIG. 2, n_{clad}/n_{SiO2}=0.9980; Δ₁=1.32%; Δ₂=-0.38%; Δ₃=0.23%; r₁=0.49 µm; r₂=2.18 µm; r₃=5.20 µm; and r₄=7.98 µm.

The optical fiber having this refractive index profile comprises the central core region 11, the side core region 16 disposed outside the central core region 11 and having the refractive index less than that of the central core region 11, the ring core region 12 disposed outside the side core region and 16 and having the refractive index greater than that of the side core region 16 and less than that of the central core region 11, the cladding 15 disposed outside the ring core region 12 and having the refractive index less than that of the central core region 11 and the ring core region 12 and greater than that of the side core region 16.

The quantity of germanium doped into the central core region 11 and the ring core region 12 is controlled less than usual to suppress the Rayleigh scattering. Depending on the reduced quantity of germanium, the refractive index of the side core region 16 and the cladding 15 may be reduced by doping fluorine using, for example, the method according to the present invention.

In this case, in order to obtain the desired dispersion characteristic, the profile formed by the relative refractive index difference of the central core region 11, the ring core region 12, and the side core region 16 with respect to the refractive index of the cladding 15, i.e., the relative refractive index profile with respect to the cladding 15 should be set to the desired shape regardless of the quantity of fluorine as a dopant. By means of such a control, the transmission loss in the non-zero dispersion shifted optical fiber can be greatly reduced without having degradation in the dispersion characteristics of the same.

Hereinafter, the degree of refractive index reduction in a refractive index profile of a dispersion compensating optical fiber will be considered.

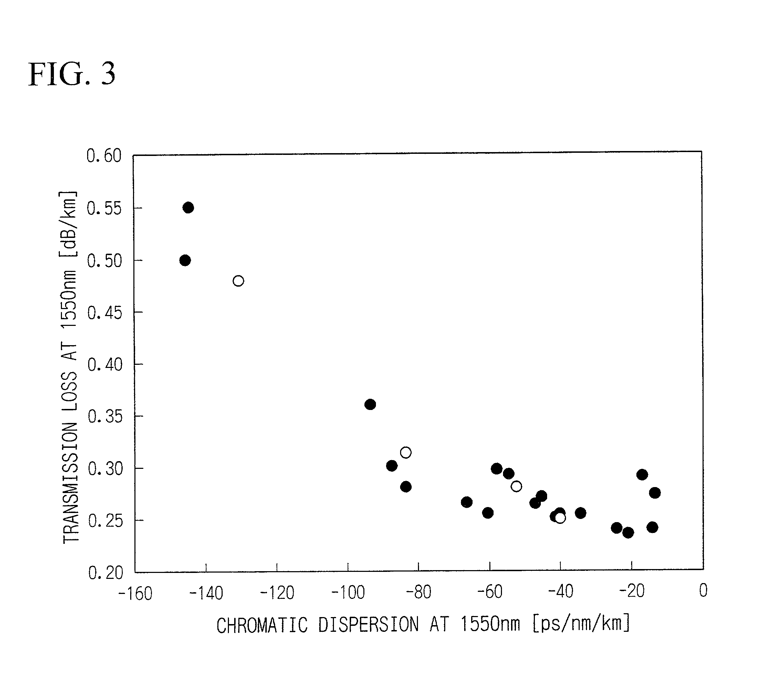

In a dispersion compensating optical fiber, there is generally a correlation between the chromatic dispersion value and the transmission loss. An example of the correlation is shown in FIG. 3. The data shown in FIG. 3 were taken from dispersion compensating optical fibers to be used as single mode optical fibers each of which exhibited RDS (Relative Dispersion Slope, i.e., the ratio between the dispersion slope and the chromatic dispersion value) of about between 0.0030 and 0.0035 nm⁻¹.

As shown in FIG. 3, in general, the transmission loss in a dispersion compensating optical fiber strongly depends on the dispersion compensating characteristic of the same. In addition, the correlation between the chromatic dispersion value and the transmission loss may be varied depending on the RDS. Therefore, it is not appropriate to express that the transmission loss in a dispersion compensating optical fiber is reduced to a certain value or below when describing that the transmission loss in an optical fiber can be reduced by using the manufacturing method according to the present invention.

As described below with reference to actual examples, it is apparent that the transmission loss in a dispersion compensating optical fiber can be reduced by forming the same using the manufacturing method according to the present invention so that the refractive index of the cladding is less than that of pure silica glass.

Therefore, in the dispersion compensating optical fiber of this embodiment, the advantageous effect that the transmission loss is reduced substantially means that the refractive index of the cladding is set to be a low value so that the transmission loss of the optical fiber is less, by at least 0.01 dB/km, than that of a reference optical fiber in which the refractive index of its cladding is substantially equal to that of pure silica glass. It is possible to realize a superior optical transmission with the dispersion compensating optical fiber in which the transmission loss is greatly reduced as described above.

Furthermore, such optical fibers are preferably used as dispersion slope compensating/dispersion compensating optical fibers when the dispersion slopes thereof are set to negative values.

The dispersion compensating optical fiber of this embodiment can be obtained by forming the optical fiber preform in which the refractive index of the cladding 15 is less than that of pure silica glass using the method similar for the non-zero dispersion shifted optical fiber according to the present invention; then, drawing the fiber from the preform. Needless to say, the refractive index profile of the core is set to be appropriate for the dispersion compensating optical fiber.

Hereinafter, some examples will be described.

### Example 1

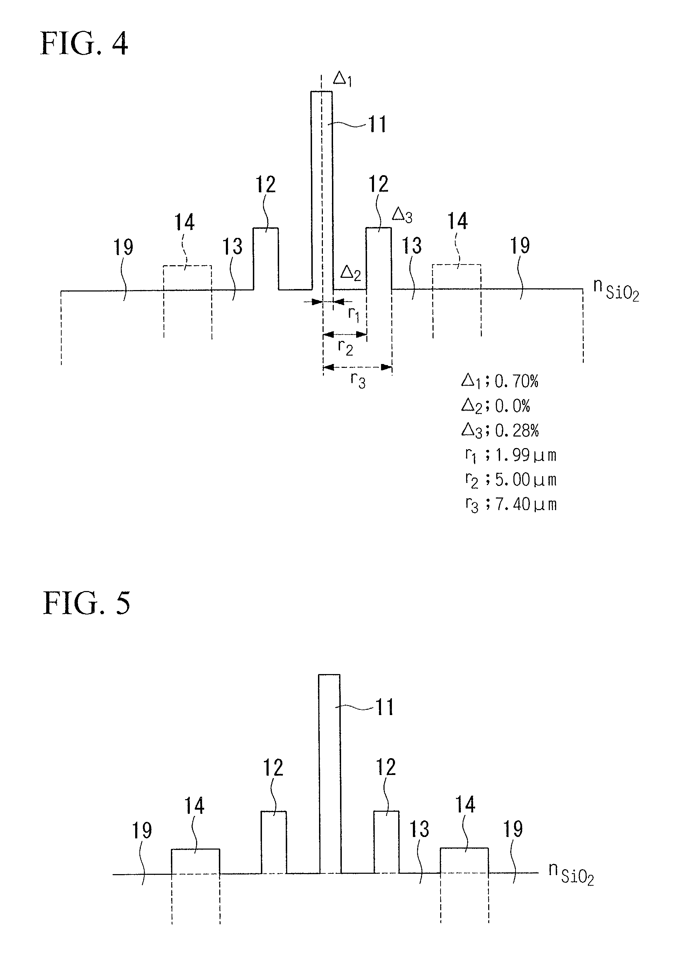

This example relates to a manufacturing method for a non-zero dispersion shifted optical fiber whose refractive index profile is shown in FIG. 4.

In FIG. 4, Δ₁=0.70%; Δ₂=0.0%; Δ₃=0.28%; r₁=1.99 µm; r₂=5.00 µm; and r₃=7.40 µm.

In this example, a desired silica rod was formed by the steps of depositing glass on an inner wall of a silica tube using the PCVD method, and collapsing the silica tube. FIG. 5 shows the refractive index profile of the silica rod measured using a preform analyzer.

The central core region 11, the ring core region 12, and the CVD synthetic cladding 13 are formed inside the silica tube 14. Germanium and fluorine are co-doped into a region from the central core region 11 to the ring core region 12 and an adjacent region (an inner cladding) of the CVD synthetic cladding 13. A region (an outer cladding) of the CVD synthetic cladding 13 between the inner cladding and the silica tube 14 consists of silica.

In the subsequent second step, the silica tube 14 was removed by flame polishing. Then, in the third step, the cladding 19 of silica was deposited using the outside deposition method and was vitrified so that the optical fiber preform was formed.

The optical fiber preform formed in the third step was analyzed by a preform analyzer, and the measurement as shown in FIG. 4 was obtained. The relative refractive index difference of each layer is with respect to the outside-deposited cladding 19.

By using this manufacturing method, the optical fiber preform having the refractive index profile in which the refractive index of the CVD synthetic cladding 13 is substantially equal to that of the outside-deposited cladding 19 was obtained.

The optical properties of the non-zero dispersion shifted optical fiber obtained from this optical fiber preform is shown in TABLE 1. TABLE 1 also shows the optical properties of another non-zero dispersion shifted optical fiber obtained from an optical fiber preform which was formed using a conventional method in which the silica tube was not removed.

**TABLE 1**

| | λ_{cc} (nm) | A_{eff} (µm²) | MFD (µm) | Chromatic dispersion (ps/nm/km) | Dispersion slope (ps/nm²/km) | Bending loss (dB/m) |
|---|---|---|---|---|---|---|
| Conventional Method | 1584 | 73.25 | 9.42 | -2.98 | 0.119 | 41 |
| Method of the Invention | 1510 | 70.45 | 9.26 | -2.5 | 0.118 | 26 |
| * λ_{cc}: Cable cut-off wavelength | | | | | | |
| * Bending loss: at diameter of 20 mm | | | | | | |
| * Measured wavelength: 1550 nm | | | | | | |

As shown in TABLE 1, in the non-zero dispersion shifted optical fiber obtained using the invented method, the cut-off wavelength is shortened by 70 nm, and the bending loss is greatly reduced.

### Example 2

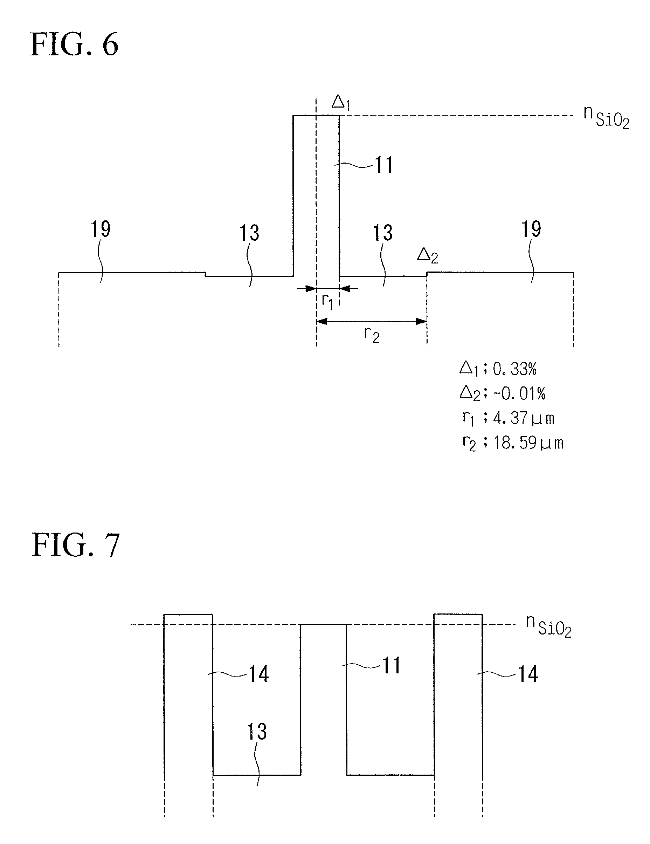

This example relates to a manufacturing method for a single mode optical fiber for 1.3 µm transmission band in which the refractive index of the core 11 is substantially equal to that of pure silica, as shown in FIG. 6. The relative refractive index difference of each layer is with respect to the outside-deposited cladding 19.

In FIG. 6, Δ₁=0.33%; Δ₂=-0.11%; r₁=4.37 µm; and r₂=18.59 µm.

In this example, in the first step, a silica rod having the desired refractive index profile was formed by depositing soot on an inner wall of a silica tube 14 using the MCVD method, and subsequently applying a vitrification process and a collapsing process. The analysis result by a preform analyzer for the silica rod formed in the first step is shown in FIG. 7.

Inside the silica tube 14, there were formed the core 11 having the refractive index which is substantially equal to that of pure silica, and the CVD synthetic cladding 13, doped with fluorine, having a refractive index which is less than that of pure silica.

Then, in the second step, the silica tube 14 was removed by flame polishing. Next, in the third step, the cladding 19 of silica was deposited using the outside deposition method and was vitrified so that the optical fiber preform was formed.

By adding the step of supplying fluorine gas before vitrification in the vitrification step, the refractive index of the outside-deposited cladding 19 was set to be less than that of pure silica. The analysis result by a preform analyzer for the optical fiber preform formed in the third step is shown in FIG. 6.

The relative refractive index difference of the outside-deposited cladding 19 was set to be greater, by about 0.01%, than that of the CVD synthetic cladding 13 so as to form a W-shaped refractive index profile.

The optical properties of the single mode optical fiber drawn from this optical fiber preform is shown in TABLE 2.

**TABLE 2**

| Properties | Transmission loss (dB/km) | λ _{cf} (nm) | A_{eff} (µ m²) | MFD (µ m) | Chromatic dispersion (ps/nm/km) | Dispersion slope (ps/nm²/km) | Bending loss (dB/m) |
|---|---|---|---|---|---|---|---|
| Measured value | 0.176 | 1220 | 83.3 | 10.4 | 17.1 | 0.06 | 10 |
| * λ_{cf}: Fiber cut-off wavelength | | | | | | | |
| * Bending loss: at diameter of 20 mm | | | | | | | |
| * Measured wavelength: 1550 nm | | | | | | | |

As shown in TABLE 2, the invented manufacturing method provides an extremely low transmission loss which is typically exhibited by a pure silica type optical fiber having a pure silica core.

### Example 3

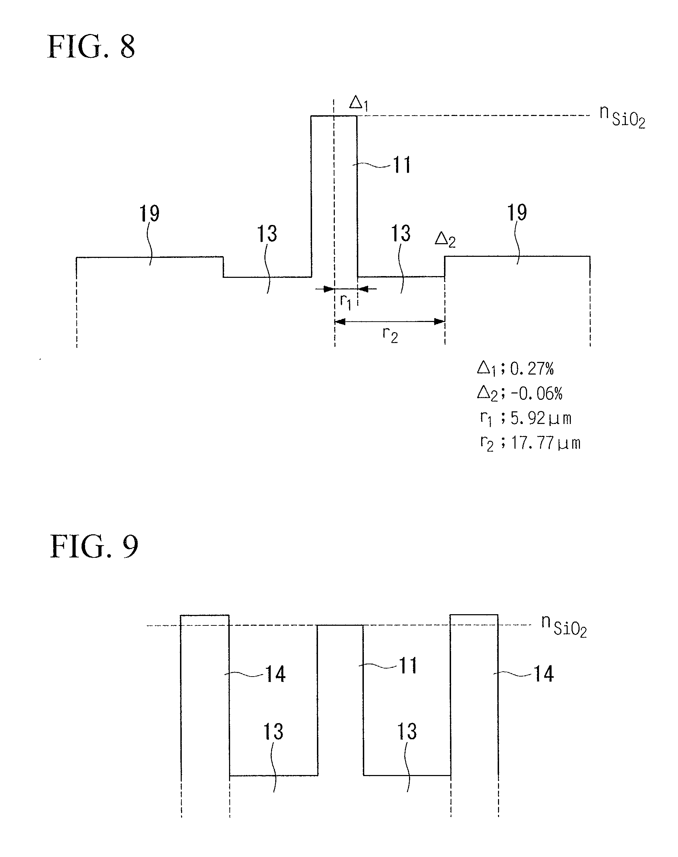

This example relates to a manufacturing method for a single mode optical fiber whose refractive index profile is as shown in FIG. 8, whose effective core area A_{eff} is increased, and whose core 11 has a refractive index which is substantially equal to that of pure silica. The relative refractive index difference of each layer is with respect to the outside-deposited cladding 19.

In FIG. 8, Δ₁=0.27%; Δ₂=-0.06%; r₁=5.92 µm; and r₂=17.77 µm.

In this example, in the first step, an optical fiber preform having the desired refractive index profile was formed by depositing soot on an inner wall of a silica tube 14 using the MCVD method, and subsequently applying a vitrification process and a collapsing process.

The analysis result by a preform analyzer for the silica rod formed in the first step is shown in FIG. 9. Inside the silica tube 14, there were formed the core 11 having a refractive index which is substantially equal to that of pure silica, and the CVD synthetic cladding 13, doped with fluorine, having a refractive index which is less than that of pure silica.

In this example, a portion of cladding 13 was formed by the MCVD method so that the refractive index profile is as shown in FIG. 9. The core 11 consists of pure silica, and the cladding 13 consists of fluorine doped silica.

Then, in the second step, the silica tube 14 was removed by flame polishing. Next, in the third step, the cladding 19 of silica was deposited using the outside deposition method and was vitrified so that the optical fiber preform was formed.

By adding the step of supplying fluorine gas before vitrification in the vitrification step, the refractive index of the outside-deposited cladding 19 was set to be less than that of pure silica. The analysis result by a preform analyzer for the optical fiber preform formed in the third step is shown in FIG. 8. The relative refractive index difference of the outside-deposited cladding 19 was set to be greater, by about 0.06%, than that of the CVD synthetic cladding 13 so as to form a W-shaped refractive index profile.

The optical properties of the single mode optical fiber drawn from this optical fiber preform is shown in TABLE 3.

**TABLE 3**

| Properties | Transmission loss (dB/km) | λ_{cc} (nm) | A_{eff} (µm²) | MFD (µm) | Chromatic dispersion (ps/nm/km) | Dispersion slope (ps/nm²/km) | Bending loss (dB/m) |
|---|---|---|---|---|---|---|---|
| Measured value | 0.177 | 1465 | 110.9 | 11.67 | 20.2 | 0.062 | 6 |
| * λ_{cc}: Cable cut-off wavelength | | | | | | | |
| * Bending loss: at diameter of 20 mm | | | | | | | |
| * Measured wavelength: 1550 nm | | | | | | | |

As shown in TABLE 3, the invented manufacturing method provides an optical fiber preform for an optical fiber whose effective core area A_{eff} is increased, and which is suitable for a super long-haul transmission system.

### Example 4

This example relates to a manufacturing method for a non-zero dispersion shifted optical fiber in which the refractive index of the cladding 15 is less than that of pure silica glass as shown in FIG. 1. The relative refractive index difference of each layer is with respect to the outside-deposited cladding 19.

In this example, in the first step, an optical fiber preform having the desired refractive index profile was formed by depositing glass on an inner wall of a silica tube (not shown) using the CVD method, and subsequently applying a collapsing process. Germanium and fluorine were co-doped into a region from the central core region 11 to the ring core region 12. The region of the CVD synthetic cladding 13 adjacent to the ring core region 12 consists of fluorine doped silica glass.

Then, in the second step, the silica tube was removed by plasma etching. Next, in the third step, soot consisting of silica was deposited using the outside deposition. By adding the step of supplying SiF₄ gas as a fluorine containing gas before vitrification of the soot, the refractive index of the outside-deposited cladding 19 was set to be less than that of pure silica. The analysis result by a preform analyzer for the optical fiber preform formed in the third step is shown in FIG. 1. In this example, the refractive index of the outside-deposited cladding 19 was set to be equal to that of the CVD synthetic cladding 13.

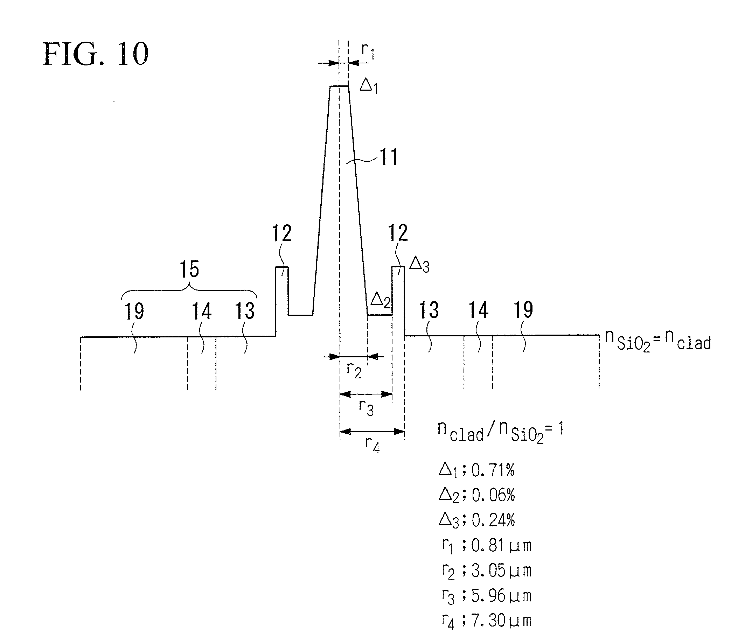

The optical properties of the non-zero dispersion shifted optical fiber drawn from this optical fiber preform is shown in TABLE 4. TABLE 4 also shows the optical properties of another non-zero dispersion shifted optical fiber obtained from an optical fiber preform which was formed using a conventional method in which the silica tube 14 was not removed. As shown in FIG. 10, in the refractive index profile of an example of a conventional optical fiber, the cladding 15 includes a region originating from the silica tube 14, and the refractive index of the cladding 15 is substantially equal to that of pure silica. This conventional optical fiber exhibits the same relative refractive index profile as the optical fiber manufactured using the method of the present invention shown in FIG.1.

In FIG. 10, n_{clad}/n_{SiO2}=1; Δ ₁=0.71%; Δ ₂=0.06%; Δ₃=0.24%; r₁=0.81 µm; r₂=3.05 µm; r₃=5.96 µm; and r₄=7.30 µm.

**TABLE 4**

| | Transmission loss (dB/km) | A_{eff} (µm²) | MFD (µm) | Chromatic dispersion (ps/nm/km) | Dispersion slope (ps/nm²/km) | Bending loss (dB/m) | PMD (ps/km^{1/2}) |
|---|---|---|---|---|---|---|---|
| Conv. Method | 0.202 | 70.1 | 9.51 | 4.65 | 0.085 | 10.5 | 0.05 |
| Method of the Invention | 0.188 | 70.2 | 9.52 | 4.7 | 0.085 | 9.8 | 0.05 |
| * Bending loss: at diameter of 20 mm | | | | | | | |
| * PMD: Polarization mode dispersion | | | | | | | |
| * Measured wavelength: 1550 nm | | | | | | | |

As shown in TABLE 4, the transmission loss in the non-zero dispersion shifted optical fiber obtained using the invented method is 0.188 dB/km, which is improved, by at least 0.01 dB/km, from that of a conventional optical fiber. The transmission loss value of 0.188 dB/km for a non-zero dispersion shifted optical fiber for 1.55 µm transmission band may not be achieved by conventional manufacturing methods. This transmission loss value is equivalent to the transmission loss in a single mode optical fiber for 1.3 µm transmission band in which the relative refractive index difference Δ between the core and the cladding is as low as 0.3%.

### Example 5

This example relates to a manufacturing method for a dispersion slope compensating/dispersion compensating optical fiber in which the refractive index of the cladding 15 is less than that of pure silica glass as shown in FIG. 2. The relative refractive index difference of each layer is with respect to the outside-deposited cladding 19.

In this example, in the first step, an optical fiber preform having the desired refractive index profile was formed by depositing glass on an inner wall of a silica tube (not shown) using the CVD method, and subsequently applying a collapsing process. Germanium and fluorine were co-doped into a region from the central core region 11 to the ring core region 12. The side core region 16 and the CVD synthetic cladding 13 consist of fluorine doped silica glass.

Then, in the second step, the silica tube was removed by plasma etching. Next, in the third step, soot consisting of silica was deposited using the outside deposition. By adding the step of supplying SiF₄ gas as a fluorine containing gas before vitrification of the soot, the refractive index of the outside-deposited cladding 19 was set to be less than that of pure silica. The analysis result by a preform analyzer for the optical fiber preform formed in the third step is shown in FIG. 2. In this example, the refractive index of the outside-deposited cladding 19 was set to be equal to that of the CVD synthetic cladding 13.

The optical properties of the dispersion slope compensating/dispersion compensating optical fiber drawn from this optical fiber preform is shown in TABLE 5.

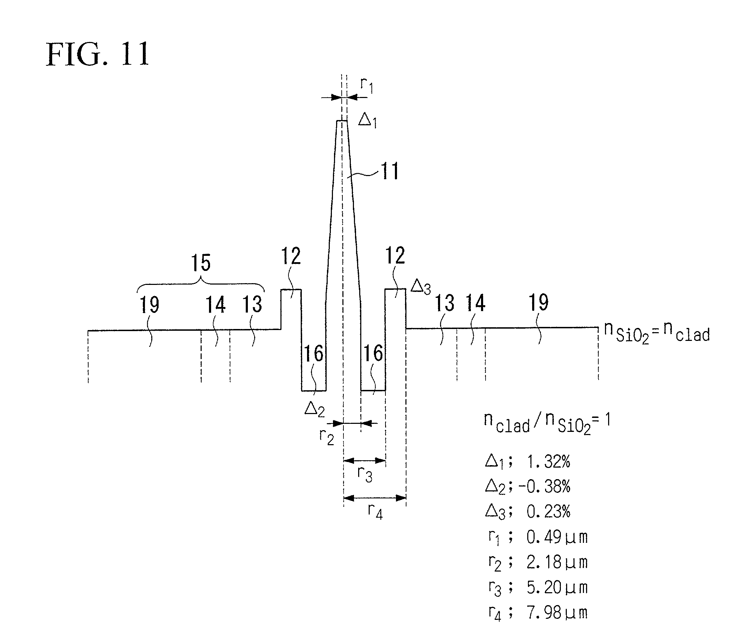

TABLE 5 also shows the optical properties of another dispersion slope compensating/dispersion compensating optical fiber obtained from an optical fiber preform which was formed using a conventional method in which the silica tube 14 was not removed. As shown in FIG. 11, in the refractive index profile of an example of a conventional optical fiber, the cladding 15 includes a region originating from the silica tube 14, and the refractive index of the cladding 15 is substantially equal to that of pure silica. This conventional optical fiber exhibits the same relative refractive index profile as the optical fiber manufactured using the method of the present invention shown in FIG 2.

In FIG 11, n_{clad}/n_{SiO2}=1; Δ₁=1.32%; Δ₂=-0.38%; Δ₃=0.23%; r₁=0.49 µm; r₂=2.18 µm; r₃=5.20 µm; and r₄=7.98 µm.

**TABLE 5**

| | Transmission loss (dB/km) | A_{eff} (µm²) | MFD (µm) | Chromatic dispersion (ps/nm/km) | Dispersion slope (ps/nm²/km) | Bending loss (dB/m) | PMD (ps/km^{1/2}) |
|---|---|---|---|---|---|---|---|
| Conv. Method | 0.28 | 22.1 | 5.4 | -53.2 | -0.137 | 5.4 | 0.07 |
| Method of the Invention | 0.25 | 22 | 5.4 | -52 | -0.137 | 5.4 | 0.07 |
| * Bending loss: at diameter of 20 mm | | | | | | | |
| * PMD: Polarization mode dispersion | | | | | | | |
| * Measured wavelength: 1550 nm | | | | | | | |

As shown in TABLE 5, the transmission loss in the dispersion slope compensating/dispersion compensating optical fiber obtained using the method of the invention is less than that of a conventional optical fiber by 0.03 dB/km.

The present invention is not limited to the above examples, and it may be employed in manufacturing optical fiber preforms having various refractive index profiles.

As described above, in the optical fiber preform obtained using the above method of the present invention, because the glass originating from the starting tube has been removed in the second step, it will not affect the refractive index profile of the optical fiber preform, the design flexibility in the refractive index is enhanced, a specific starting tube need not be prepared, and productivity and production flexibility are improved.

In addition, an advantageous effect that an optical fiber which is not affected by impurities originating from the starting tube and which has superior optical properties can be obtained.

Furthermore, by using the method of the present invention, an optical fiber in which the refractive index of the cladding is less than that of pure silica may be easily obtained, and an optical fiber having an extremely low transmission loss may be obtained because the refractive index profile can be precisely controlled and it is possible to suppress the Rayleigh scattering caused by a dopant doped into the core.

## Claims

1. A method for manufacturing an optical fiber preform, comprising:
a first step of depositing glass on an inner wall of a starting tube (14) and collapsing said starting tube (14) so that a silica rod is formed; and
a second step of removing said starting tube (14) surrounding said silica rod or removing said starting tube (14) and a portion of synthetic glass.

2. A method for manufacturing an optical fiber preform, comprising:
a first step of depositing glass on an inner wall of a starting tube (14) and collapsing said starting tube (14) so that a silica rod is formed;
a second step of removing said starting tube (14) surrounding said silica rod or removing said starting tube (14) and a portion of synthetic glass; and
a third step of depositing glass on an outer periphery of said silica rod obtained in said second step.

3. A method according to claim 1 or 2, wherein said second step is performed by any one of flame polishing, plasma etching, and mechanical polishing.

4. A method according to claim1, wherein glass for forming a core (11, 12) and glass for forming a cladding (13) are deposited in said first step.

5. A method according to claim 2, wherein glass for forming a core (11, 12) is deposited, or glass for forming a core (11, 12) and glass for forming a part of a cladding (13) are deposited in said first step.

6. A method according to claim 2, wherein glass for forming a cladding (19) is deposited in said third step.

7. An optical fiber preform manufactured using the method according to claim 1.

8. An optical fiber preform manufactured using the method according to claim 2.

9. An optical fiber preform according to claim 8, wherein the refractive index of said glass for forming said cladding (19) deposited in said third step is substantially the same as that of pure silica glass.

10. An optical fiber preform according to claim 8, wherein the refractive index of said glass for forming said cladding (19) deposited in said third step is lower than that of pure silica glass.

11. An optical fiber formed from the optical fiber preform according to any one of claims 7 to 10.

12. An optical fiber according to claim 11, wherein, over the range selected from a wavelength band between 1460 and 1625 nm, the absolute value of the chromatic dispersion of said optical fiber is between 1 and 15 ps/nm/km, the absolute value of the dispersion slope thereof is equal to or less than 0.1 ps/nm²/km, and the transmission loss thereof at a wavelength of 1550 nm is equal to or less than 0.195 dB/km.

13. An optical fiber according to claim 11, wherein, over the range selected from a wavelength band between 1460 and 1625 nm, the chromatic dispersion of said optical fiber is a negative value, the refractive index of said cladding is less than that of pure silica glass, and the transmission loss of said optical fiber at a wavelength of 1550 nm is less, at least 0.01 dB/km, than that of a comparative optical fiber which fulfills the following conditions:
(a) the refractive index of the cladding of the comparative optical fiber is equal to that of pure silica glass; and
(b) the relative refractive index profile with respect to the refractive index of the cladding of the comparative optical fiber is the same profile as that of said optical fiber.

14. An optical fiber according to claim 13, wherein the dispersion slope of said optical fiber is a negative value.
